# EUROPEAN PATENT SPECIFICATION

(11) **EP 0 596 673 B1**
(45) Date of publication and mention of the grant of the patent: **11.03.1998**
(21) Application number: 93308689.4
(22) Date of filing: 29.10.1993
(51) Int. Cl.: B23D 25/14

(54) **Cutting mill apparatus**
Trommelschere
Cisaille à lame rotative

(30) Priority: 30.10.1992 GB 9222786
(43) Date of publication of application: 11.05.1994
(73) Proprietor: Brown, Charles Boswell, Chesterfield S40 3PN (GB)
(72) Inventor: Brown, Charles Boswell, Chesterfield S40 3PN (GB)
(74) Representative: Linn, Samuel Jonathan

(56) References cited:
- WO-A-80/01259
- US-A- 3 799 020

## Description

The invention relates to a cutting mill for the cutting of metal with a shearing action, and in particular to a mill being primarily but not exclusively intended for the production of metal particles or granules.

Cutting mills for the cutting of relatively soft materials such as synthetic plastics materials are well known, such mills usually having a rotor with at least three equally spaced blades and at least one stationary bed knife or stator blade with which the rotor blades co-operate to shear material fed into the mill. (There are usually a pair of oppositely disposed stationary bed knives).

The rotor blades and the at least one stationary bed knife usually lie parallel to an axis of rotation of the rotor so that the shearing of material can take place simultaneously along virtually the entire length of a rotor blade and co-operating bed knife. This results in large changes in cutting forces as the chopping of the material proceeds and the resultant varying stresses cause vibration and noise. When processing relatively soft plastics materials these stresses may be at acceptable levels. However, because of the much higher cutting forces for metals, the stresses associated with a parallel cut become unacceptable in a mill intended for the production of metal particles or granules.

One solution of this problem which has been tried has been a modification involving the cutting of each bed knife into several short lengths and the mounting of these in staggered fashion so that the cutting action has been similarly staggered. However, this has been found to be only partially successful, mainly because the weakest parts of a shear blade are its end portions; the modification described has multiplied the number of relatively weak blade end portions.

A further solution, which has been used with a granulator for the cutting of plastics materials, is to incline the rotor blades at an angle to the axis of rotation. This produces what is called a "scissors cutting action", although unless the inclined blade is a true helix then a true cutting action cannot be obtained all along the length of the rotor blade.

For long life, blades have to be made from hardened steels and other special materials and the difficulty and expense of making these with anything except straight edges is generally avoided. Thus a true helix cannot easily be provided in such a machine. Where continuous straight blades are mounted to give a "scissors cut", the practice is to use cutting blades with knife-edges i.e. cutting blade edges of substantially less than 80°.

The fact that cutting mills have in the past been used for the cutting of relatively soft materials has enabled the rotor blades to be generally sharpened in a manner resulting in a relatively small included angle at the cutting edge, perhaps as small as 45° which would be considered a weak cutting edge for metals. However, by mounting such blades so that they approach the or each bed knife in "point-attack" fashion a clean cutting action has taken place and the rotor blades and bed knives have had a reasonable useful life, although they may have required resharpening from time to time.

The object of the invention is to provide a construction of cutting mill which may be more suitable for the cutting of much harder materials such as steel turnings.

United States patent no. US 3799020 discloses a rotary scrap chopper for cutting scrap edged trimming from flat sheet metal strips. The chopper comprises a pair of knife carrying rotary arbors cooperable with a stationary knife to effect cutting of the edge trimmings into short pieces of scrap metal.

The present invention provides a cutting mill including: a rotor having a rotor blade mounted thereon and being rotatable about an axis of rotation; and a stator blade;
the rotor blade and stator blade defining between them a nip point as the blades pass each other with a cutting clearance during rotation of the rotor;
the rotor blade having a leading face and a trailing face, said faces defining the cutting edge of the rotor blade, said leading face having a leading face axis which is a line along the leading face, the leading face axis intersecting the cutting edge at the nip point and lying in a plane perpendicular to the axis of rotation of the rotor;
there being defined a first imaginary plane containing the axis of rotation of the rotor and parallel to said leading face axis;
there being further defined a second imaginary plane containing the axis of rotation of the rotor and the point of the cutting edge of the rotor adjacent the nip point;
   wherein the angle measured from said first plane to said second plane in the direction of rotation of the rotor is between 0° and 90°, this condition being satisfied for any point of the cutting edge of the rotor blade which with the stator blade defines a nip point defined between the blades as they pass each other,
   and wherein the cutting edge of the rotor blade is inclined to the axis of rotation of the rotor tangentially to the direction of the rotor, and the cutting edge of the stator blade is inclined to the axis of rotation of the rotor in the opposite direction to the inclination of the rotor blade and at substantially the same angle.

In this way, by providing a cutting mill where the blades can be considered to be mounted with an opposite off-set to the conventional "point-attack" mounting, a rotor blade of simpler construction and/or stronger characteristics may be provided. Another way of considering the invention is that in a cutting mill according to the present invention the second imaginary plane is "in advance" (in the sense of the direction of rotation of the rotor) of the first plane, whereas in a conventional mill the rotor blade is mounted so that the second plane trails the first plane.

The nip point occurs as a portion of the rotor blade contacts (or comes close to contacting depending on how the machine is set up) a portion of the stator blade. Clearly if the rotor blade and stator blade are mounted with their cutting edges parallel to each other then the nip point will occur at the same time for all portions of the blades - effectively the locus of all the nip points will be a straight line. However if the blades are mounted with their cutting edges inclined at an angle to each other then the nip point for each part of the blades will occur at a different time in the cycle of rotation of the rotor i.e. the nip point will "move" along the meeting cutting edges of the blades as the blades pass each other. This is a similar situation to that which occurs when a pair of scissors are operated - the nip point of the blades moves away from the handle of the scissors as the scissors are closed.

When the rotor blade is mounted in position on the rotor there will be two faces of the blade which define the cutting edge at any given point. The leading face of the blade is that one of these two faces which is in the leading position in the direction of rotation of the rotor. In other words, the non-leading (or trailing) face is that face of the rotor blade which must clear the stator blade as the blades pass each other. If there is no clearance then the blades will collide causing damage, and the amount of clearance is usually referred to as the clearance rake angle.

The leading face axis is a line along the leading face which includes the nip point and lies in a plane perpendicular to the axis of rotation of the rotor. It will be appreciated that if the cutting edge of the rotor blade is parallel to the axis of rotation on the rotor then the first imaginary plane is parallel to both the leading face axis and the actual plane of the leading face (or at least that portion of the leading face which defines the cutting edge). However if the rotor blade is inclined to the axis of the rotor then the first imaginary plane, which is still parallel to the leading face axis, is no longer parallel to the plane of the leading face. Clearly no part of the blade actually rotates around this axis - it is simply a convenient reference line.

A further way of considering the leading face axis would be to take a cross sectional view through the rotor blade in a plane which includes the nip point and is perpendicular to the axis of rotation on the rotor. The edge of the leading face seen in this cross section (or at least that portion of the edge of the leading face adjacent the cutting edge in the case of a blade with a non-straight leading face) defines the leading face axis.

According to the invention, the cutting edge of the rotor blade is inclined to the axis of the rotation of the rotor, and the cutting edge of the stator blade is inclined to the axis of rotation of the rotor in the opposite direction to the inclination of the rotor blade and at substantially the same angle (and preferably exactly the same angle). This allows for a true scissors cut to be performed i.e. for the blades to cut along the whole of their lengths, without requiring a helical blade.

Preferably the angle of the cutting edge of the rotor blade (that is, the angle between the two faces of the rotor blade which define the cutting edge) and/or stator blade is at least 80°, and in one preferred embodiment is substantially 90°. The mounting of the rotor blade in a position on the rotor according to this aspect of the present invention facilitates the use of such large cutting edge angles. By off-setting the rotor blade in this manner, cutting angles of 90°, and even greater angles, can be used whilst still providing a clearance rake angle i.e. a cutting clearance between the rotor blade and stator blade. Clearly, the greater the angle between the two imaginary planes i.e. the greater the off-set of the rotor blade, the larger the angle of the cutting edge of the rotor blade can be whilst maintaining a sufficient cutting clearance.

The use of a 90° cutting edge allows for the sharpening of the blade to be achieved more easily and strengthens the cutting edge i.e. the blade will be less likely to chip than a knife edge blade.

Similarly, the cutting angle of the stator blade may be greater than 80° and is preferably substantially 90°.

Advantageously, the rotor blade may be provided with two 90° cutting edges, or even four such cutting edges - in the latter case the blade will be rectangular in cross section. This allows for the blade to be repositioned in its mounting so that a different edge of the blade can be used as a cutting edge (with, in the latter case, four cutting edges being available). This will improve the life of the blade and reduce the frequency with which it needs sharpening.

As mentioned above, the angle between the two imaginary planes i.e. the off-set of the rotor blade (and corresponding off-set of the stator blade), may vary depending on various factors such as the size of the blade, the angle of the cutting edge, the diameter of the rotor, the length of the rotor, and the shape of the blade. For a typical rotor used with a rectangular rotor blade, the off-set of the rotor blade should preferably be between 0.1% and 20% of the nominal rotor diameter, and in one preferred embodiment should lie between 0.5% and 10% of the nominal rotor diameter. In terms of the angle between the two imaginary planes, these percentages equate to an angle of between 0.1° and 22° in the first case, and between 0.6° and 11° in the second case.

If the cutting edge of the rotor blade is parallel to the axis of rotation of the rotor then this off-set will be the same for all points along the cutting edge i.e. all nip points. However if the cutting edge of the rotor blade is inclined to the axis of rotation of the rotor then this off-set will vary along the blade. Preferably therefore one end of the blade may have an off-set near to the upper value of the chosen range whilst the off-set of the other end of the blade will be closer to the lower value of the range. The same applies to the stator blade.

A mill according to the present invention, which may be used as a metal granulator, may have any number of rotor or stator blades. In one preferred embodiment the mill is provided with three rotor blades and two stator blades. The stator blades may be oppositely positioned and the rotor blades equally spaced around the rotor.

In order that the invention may be fully understood and readily carried into effect, the same will now be described, by way of example only, with reference to the accompanying drawings, of which:-
Figure 1 is a semi-diagrammatic perspective view of a cutting mill embodying the invention,
Figure 2 is a semi-diagrammatic front view of the rotor of the mill,
Figure 3 is a semi-diagrammatic plan view thereof,
Figure 4 is an end view looking in the direction of arrow 4 in Figure 2,
Figures 5 and 6 are diagrammatic illustrations which will be referred to when describing the geometry on which the invention is based,
Figures 7a, 7b and 7c show a cylindrical rotor with a cutting edge skewed across it, and the effect that this has on the cutting radius,
Figure 8 is a diagrammatic view on the line 8-8 in Figure 2,
Figure 9a show a cross sectional view through a rotor with a rotor blade mounted according to the prior art,
Figure 9b shows a cross-sectional view through a rotor with a rotor blade mounted according to one aspect of the present invention,
Figure 10 is a diagrammatic view on the end of the rotor and showing how each rotor blade co-operates in turn with each bed knife,
Figures 11, 12 and 13 are diagrammatic views which show the effective cutting angles at the commencement, at a mid-point and at the end of a cut, respectively, and

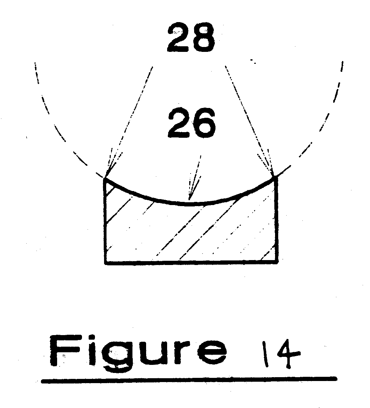

Figure 14 is a view illustrating a possible modification.

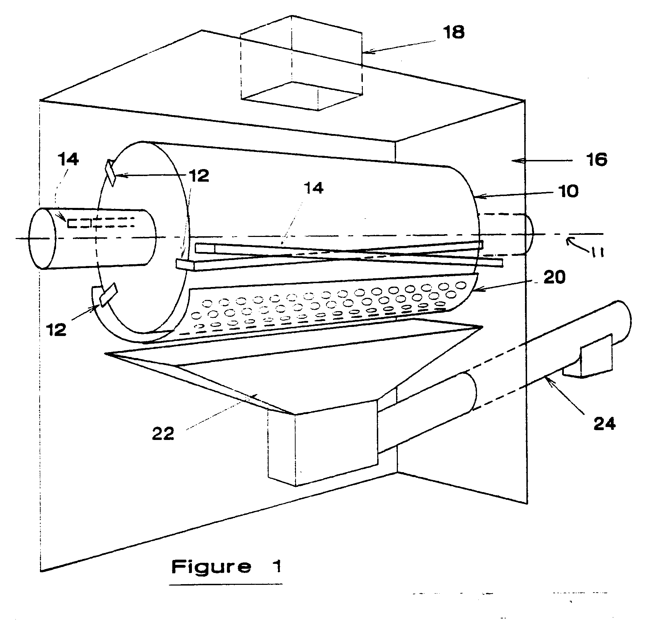

Referring now to Figure 1 of the drawings, the cutting mill there illustrated is a metal granulator for the cutting of metal e.g. swarf, and includes a rotor, generally indicated 10, having three circumferentially spaced rotor blades 12, and a pair of oppositely disposed stationary bed knives (or stator blades) 14.

Means (not shown) are provided for driving the rotor, and the bed knives are mounted on a part of the housing (also not shown).

The rotor is mounted for rotation around a rotor axis 11 in substantial bearings (not shown) in a housing 16 into which scrap metal can be fed through a chute 18. A screen 20 is located in the housing beneath the rotor. Material passing through the screen falls into a hopper 22 from where it can be removed by a conveyor 24. As the rotor rotates, the blades 12 co-operate with the bed knives 14 to shear material fed into the mill through the chute 18. The pieces of material are sheared repeatedly until the granules produced are small enough to pass through the screen.

The blades 12 of the rotor and the bed knives 14 are each constituted by respective straight lengths of steel bar of rectangular cross section. In this way each blade and knife has four cutting edges which can be used in turn by appropriate repositioning.

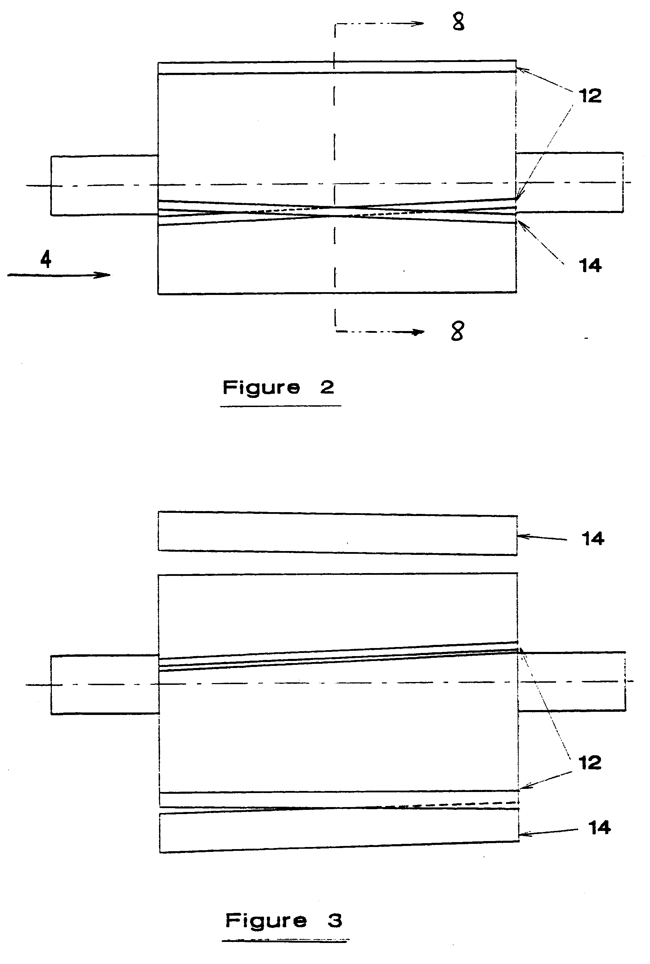

Referring now in particular to Figures 2 and 3, it will be seen that in order to obtain a scissor-like cutting action, the blades 12 of the rotor are each mounted thereon with an operative cutting edge in a plane at an inclination to the rotor axis 11.

In order to compensate for the fact that each blade, being of straight form, does not describe a true helix, each bed knife 14 is oppositely inclined to the axis at the substantially same angle relative to the rotor axis. This gives a true scissors cut, that is to say a cut where the blade edges touch all along their length.

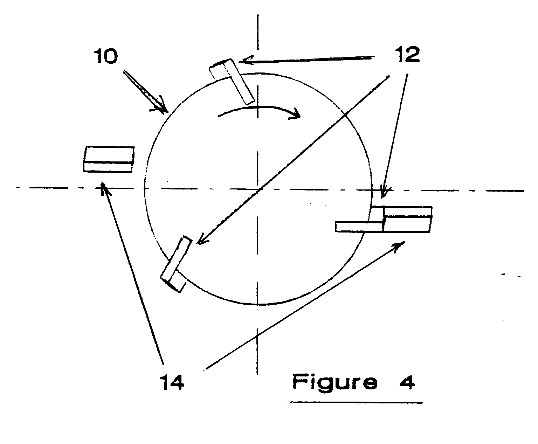

Figure 4, which is a side view in the direction of arrow 4 in Figure 2, also shows how the rotor and stator blades are mutually inclined in order to provide the scissors cutting action. In addition, it can be seen from Figure 4 that the rotor blades are off-set i.e. they do not lie in a plane which intersects the axis of rotation of the rotor. This will be explained in further detail later.

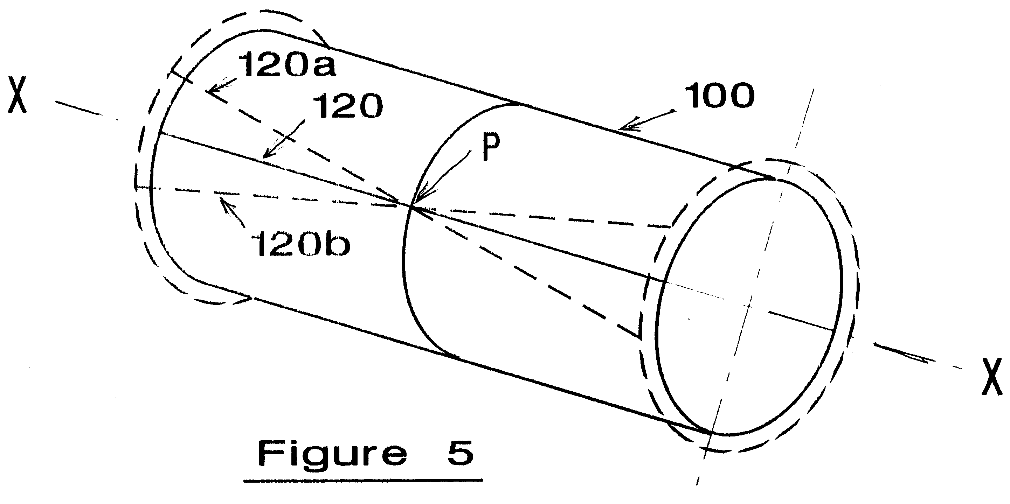

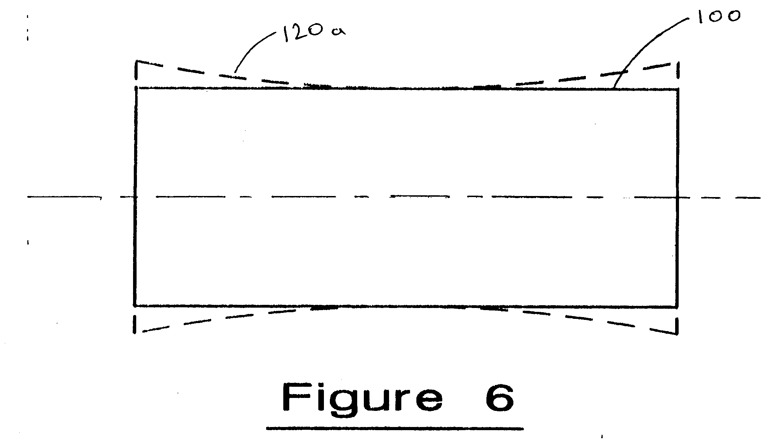

Figure 5 shows a cylinder of revolution 100 generated by a line 120 moving around an axis X-X. However, it will be seen that it the line 120 is tilted (as is the rotor blade) about its midpoint P, in a plane tangential to the cylinder to become line 120a, the solid of revolution generated by line 120a will not be a cylinder but will be waisted as shown in exaggerated fashion in Figure 6. If the line 120 had been tilted through the same angle in the opposite direction about the point P, to become line 120b, the solid of revolution would have been exactly the same shape.

Consequently, it will be understood that in a cutting mill for the cutting of metal with a shearing action, a true scissors cut can be obtained of one of the lines 120a and 120b is the line along the cutting edge of a bed knife and the other line is the line along the cutting edge of a rotor blade.

It will of course also be understood that the above is true for any part of the length of a cutting device based on the Figure 5 illustration. In other words, such a device need not necessarily be symmetrical and the point P need not necessarily be the midpoint along the cutting edges of the bed knife and rotor blade.

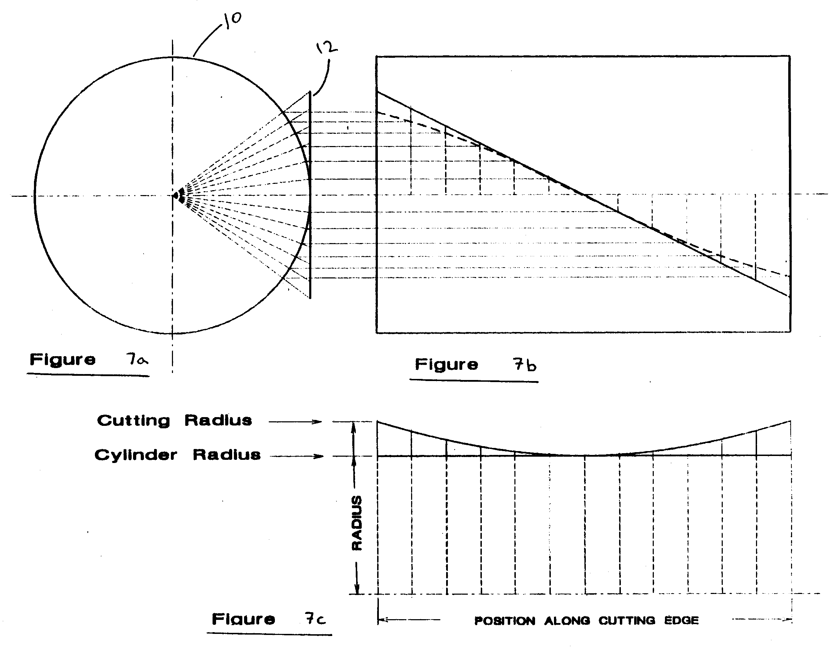

The effect on the cutting radius relative to the cylinder radius produced by mounting a skewed cutting edge on a cylindrical rotor is shown in Figure 7a, 7b and 7c. Figure 7a shows a diagrammatic side view of a rotor edge 12 mounted at an angle to the axis of rotation of a rotor 10. The radii line shown in Figure 7a correspond to the lines in Figure 7b, where the heavy dotted line is the path that the radii trace on surface of the cylinder. Figure 7c shows how the cutting radii vary along the length of the cutting edge, with the cutting radius being greatest at the ends of the cutting edge and least in the centre.

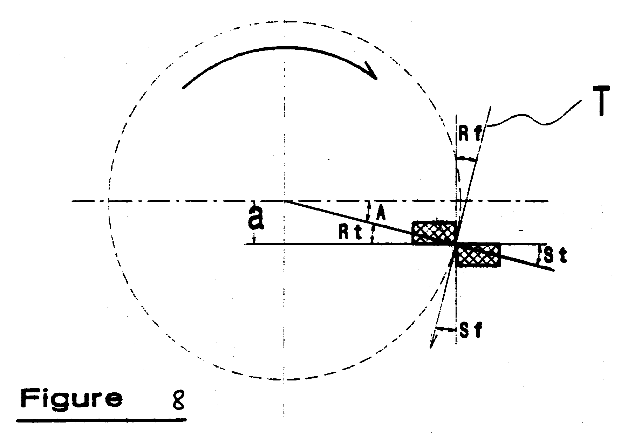

As shown in Figure 8, it can be seen that in the cutting mill just described, the manner in which each bed knife co-operates with the blades of the rotating rotor is closely analogous to the manner in which a lathe tool is presented to a rotating workpiece; each bed knife and each rotor blade must have a front rake angle to give cutting clearance and minimise rubbing down the blade surface beneath the cutting edge.

This front rake angle Rf and Sf is provided by off-setting the blades as shown through the distance a from a diameter through the rotor axis parallel with the cutting face of the blade. This does not affect the way in which a true scissor-like cutting action is obtained because the cutting edges can be considered to be the lines 120a and 120b in Figure 5 in which the line 120 was tilted about the point P. It will be seen that at this mid-point along the length of each co-operating blade and bed knife this also produces the same amount of negative top rake Rt and St but this is not detrimental to the operation of the mill because the angle concerned is so very small.

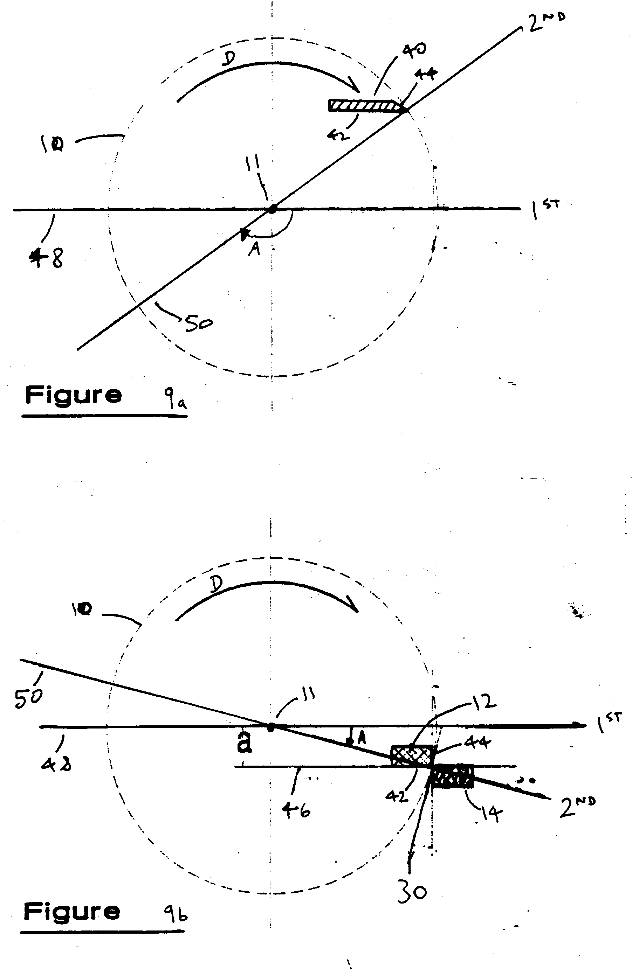

In order to more clearly define the off-set distance a, and to make clear the geometry of the present invention, it is desirable to make reference to two imaginary planes of reference, and these are shown in Figures 9a and 9b. Figure 9a shows a rotor blade 40 mounted in a conventional position on a rotor 12. The rotor 10 is turning clockwise in the direction of arrow D. Figure 9b shows a rotor blade 12 (in cross section) mounted on the rotor according to one aspect of the present invention.

As can be seen in Figure 9b the rotor blade 12 has a leading face 42 and a trailing face 44, which faces define the cutting edge of the blade. At the instant in time in which the cross-sectional view of Figure 9b is taken, a portion of the rotor blade 12 is meeting a corresponding portion of the stator blade 14 and defining a nip point 30. At this point there is defined a leading face axis 46 which is a line along the leading face of the rotor blade which includes the nip point 30 and lies in the plane of the cross-section. The plane of the cross-section is such that it is perpendicular to the axis of rotation 11 of the rotor.

There is then defined a first imaginary plane 48 containing the axis of rotation 11 of the rotor and being parallel to the leading face axis 46. There is also defined a second imaginary plane 50 which contains the axis of rotation of the rotor and the nip point 30. The same axes 48 and 50 may be defined for the conventionally positioned rotor blade 40 in Figure 9a.

According to the present invention, the leading face axis of the rotor blade 12 is off-set from the first imaginary plane 48 by a distance a. The stator blade may also be correspondingly off-set. In other words the second imaginary axis 50 leads the first imaginary axis 48 (in the direction D of rotation of the rotor) by angle A, angle A being between 0° and 90°. As can be seen from Figure 9a, angle A for a conventionally placed rotor blade 40 is greater than 90° i.e. the rotor blade 40 trails the first imaginary plane 48. Alternatively, in a conventional machine the angle A can be considered to be between 0° and -90°.

The manner in which a cutting tool is presented to a workpiece is vital to the proper operation of the tool and to the prolongation of its useful life. For example, the amount of front rake must be adequate to avoid rubbing down the surface beneath the cutting edge but should be kept to a minimum so that the cutting edge is well supported and will have a long useful life.

The presence of a small amount of negative top rake is not detrimental in most cases, depending on the materials being worked, but an excessive amount of negative top rake will affect the proper operation of the tool. The included angle at the cutting edge, which in this case is a right angle, determines the strength of the cutting edge and the ability of the cutting edge to stand up to rigorous service. An excessive amount of negative top rake will thus be accompanied by excessive front rake so that the cutting edge may not be adequately supported and the cutting edge will quickly fail.

In metal machining it has been a practice to further increase the strength of cutting edges by modifying the sharp cutting edge by bevelling or rounding. For the purposes of this invention the cutting edges of the blades may be so modified in order to increase their strength. The description of the angle of cutting edges in this specification is used to describe the general shape of the blade rather than the macro or micro finish of the cutting edge.

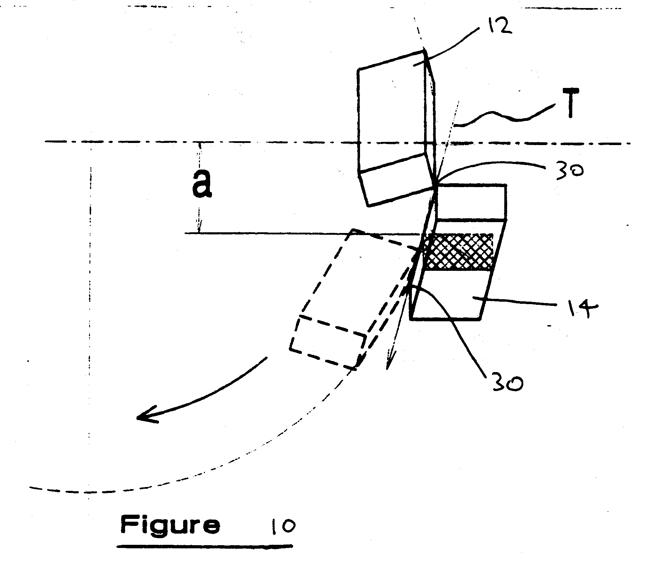

As mentioned above, the shape generated by the rotating blades of the rotor is not truly cylindrical but is very slightly parabolic due to the manner in which the straight edges blades and straight bed knives are arranged in order to produce a scissor-like cutting action. As shown diagrammatically in Figure 10 this causes the effective front rake and effective top rake of each rotor blade and of each bed knife to vary from one end of a cut to the other as a blade and bed knife pass each other.

Figure 10 also illustrates how the nip point 30 between the rotor blade 12 and stator blade 14 "moves" along the length of the blades as they pass each other.

Referring to Figure 11, as the illustrated rotor blade 12 and bed knife 14 first make contact with each other (at the position in which the rotor blade is shown in full lines in Figure 10), the rotor blade rake angles Rf and Rt are at a maximum and the bed knife rake angles Sf and St are a t a minimum.

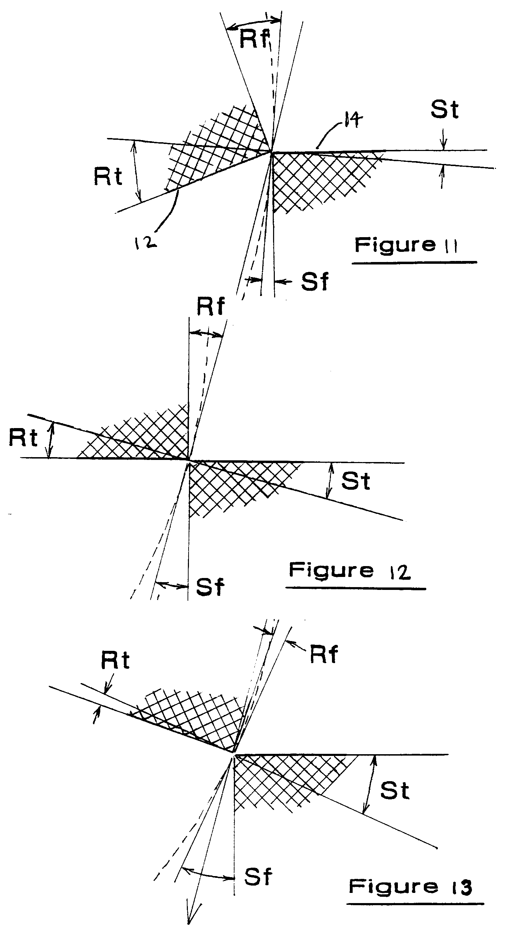

In Figure 12, which is the position of the blade at the mid-point along the scissors cut, the blade and bed knife off-sets are equal.

In Figure 13, at the end of the cut (and in the position in which the rotor blade is shown in chain-dotted lines in Figure 10), the rotor blade rake angles Rf and Rt are at a minimum and the need knife rake angles Sf and St are at a maximum.

It has been found possible to design a mill as described above with its rotor blades and bed knives arranged so that although the effective front and top rake angles vary from one end of the mill to the other they remain within acceptable limits, that is to say so that at one end of the mill the amount of front rake of each blade is just adequate to give the required clearance beneath the cutting edge and at the other end of the mill the increased amount of negative top rake and of front rake of each blade is not too excessive so that proper cutting can still take place and the cutting edge is not too weakened.

This has been done by restricting the blade inclination in relation to the rotor diameter-to-length ratio, and clearly depends on the cutting angle chosen (which in this case is 90°). The acceptable limits will also depend to some extent on the material of the blades and can be determined by trial and experiment.

However, to aid correct cutting throughout the entire length of the mill, and for the avoidance of excessive rates of wear of the cutting edges, preferably the amount of off-set a of the or each bed knife (see Figure 7) should lie between 0.1%-20%, and more preferably between 0.5% and 10%, of nominal rotor diameter. That is to say, more preferably should not exceed 10% nominal rotor diameter at one end of the mill and should not be less than 0.5% nominal rotor diameter at the other end of the mill. These limits correspond to angle A (in Figure 8) lying between 0.1° and 22° in the first case, and 0.6° and 11° in the second case.

For reasons of strength and to make the replacement of at least the rotor blades a relatively inexpensive procedure, it is preferred that the rotor blades, and preferably also the or each bed knife, should be made of respective lengths of bar of rectangular cross section. However, it would be possible make each rotor blade and/or the or each bed knife of the cross section illustrated in Figure 12, that is to say of a generally rectangular cross section with a ground surface 26 producing a pair of cutting edges 28 useable in turn. A blade of such cross section would will be relatively strong and the simplicity of mounting of a straight rectangular section blade would be retained.

Thus, there is provided a cutting mill for the production of metal particles or granules which has a number of important advantages. The fact that it operates with a scissor-like cutting action substantially reduces vibration. The fact that the rotor blades and bed knives may be constituted by respective lengths of bar of rectangular or generally rectangular cross section is advantageous in that each blade or knife has at least two and possibly four cutting edges which can be used in turn by appropriate re-positioning before replacement or re-sharpening by grinding is required. The initial cost of such blades and knives can be expected to be relatively low and the manner in which the rotor is machined in order to receive the rotor blades is relatively simple.

Various modifications may be made. For example, the mill may be provided with any convenient number of bed knives and any convenient number of rotor blades depending on the diameter of the rotor. The appropriate angular setting of the or each bed knife and of each rotor blade may be determined by trial and experiment.

The rotor blades and the or each bed knife need not necessarily be made of steel. They may for example be made of carbide or of ceramic material.

## Claims

1. A cutting mill including:
a rotor (10) having a rotor blade (12) mounted thereon and being rotatable about an axis of rotation (11); and
a stator blade (14);
the rotor blade and stator blade defining between them a nip point (30) as the blades pass each other with a cutting clearance during rotation of the rotor;
the rotor blade having a leading face (42) and a trailing face (44), said faces defining the cutting edge of the rotor blade (12), said leading face (42) having a leading face axis (46) which is a line along the leading face, the leading face axis (46) intersecting the cutting edge at the nip point (30) and lying in a plane perpendicular to the axis of rotation (11) of the rotor;
there being defined a first imaginary plane (48) containing the axis of rotation (11) of the rotor (10) and parallel to said leading face axis (46);
there being further defined a second imaginary plane (50) containing the axis of rotation (11) of the rotor (10) and the point of the cutting edge of the rotor adjacent the nip point (30);
wherein the angle measured from said first plane to said second plane in the direction of rotation of the rotor is between 0° and 90°, this condition being satisfied for any point of the cutting edge of the rotor blade (12) which with the stator blade (14) defines a nip point (30) defined between the blades as they pass each other,
characterised in that the cutting edge of the rotor blade (12) is inclined to the axis of rotation (11) of the rotor (10), tangentially to the rotor, and the cutting edge of the stator blade (14) is inclined to the axis of rotation (11) of the rotor (10) in the opposite direction to the inclination of the rotor blade (12) and at substantially the same angle.

2. A cutting mill according to claim 1 in which the rotor blade (12) has a cutting edge of at least 80°.

3. A cutting mill according to claim 1 or claim 2 in which the rotor blade (12) has a cutting edge of substantially 90°.

4. A cutting mill according to claim 3 in which the rotor blade (12) is rectangular in cross section.

5. A cutting mill according to any of the above claims in which each edge of the rotor blade (12) is usable as a cutting edge.

6. A cutting mill according to any of the above claims in which said angle between the first and second planes is between 0.1° and 22°.

7. A cutting mill according to any of the above claims in which said angle between the first and second planes is between 0.6° and 11°.

8. A cutting mill according to any of the above claims having three rotor blades (12).

9. A cutting mill according to any of the above claims having two stator blades (14).

## Patentansprüche

1. Abschereinrichtung, umfassend:
einen Rotor (10), auf dem ein Rotorblatt (12) montiert ist und der um eine Rotationsachse (11) drehbar ist; und
ein Statorblatt (14);
wobei das Rotorblatt und das Statorblatt zwischen einander einen Abscherpunkt (30) definieren, wenn sich die Blätter während der Drehung des Rotors in einem Abscherabstand aneinander vorbeibewegen;
wobei das Rotorblatt eine Vorauseilfläche (42) und eine Nacheilfläche (44) aufweist, wobei die Flächen die Abscherkante des Rotorblatts (12) definieren, wobei die Vorauseilfläche (42) eine Vorauseilflächenachse (46) aufweist, die als Linie entlang der Vorauseilfläche verläuft, wobei die Vorauseilflächenachse (46) die Abscherkante am Abscherpunkt (30) schneidet und in einer im rechten Winkel zur Rotationsachse (11) des Rotors verlaufenden Ebene liegt;
wobei eine erste imaginäre Ebene (48) definiert ist, die die Rotationsachse (11) des Rotors (10) enthält und parallel zur Vorauseilflächenachse (46) verläuft;
wobei weiters eine zweite imaginäre Ebene (50) definiert ist, die die Rotationsachse (11) des Rotors (10) und den Punkt der Abscherkante des Rotors enthält, der dem Abscherpunkt (30) benachbart ist;
worin der von der ersten Ebene zur zweiten Ebene in Rotationsrichtung des Rotors gemessene Winkel zwischen 0° und 90° liegt, wobei diese Bedingung für jeden Punkt der Abscherkante des Rotorblatts (12) erfüllt ist, der mit dem Statorblatt (14) einen Abscherpunkt (30) definiert, der zwischen den Blättern definiert ist, wenn sie sich aneinander vorbeibewegen,
dadurch gekennzeichnet, daß die Abscherkante des Rotorblatts (12) zur Rotationsachse (11) des Rotors (10) tangential zum Rotor geneigt ist und die Abscherkante des Statorblatts (14) zur Rotationsachse (11) des Rotors (10) in entgegengesetzter Richtung zur Neigung des Rotorblatts (12) und im wesentlichen im gleichen Winkel geneigt ist.

2. Abschereinrichtung nach Anspruch 1, bei dem das Rotorblatt (12) eine Abscherkante mit zumindest 80° aufweist.

3. Abschereinrichtung nach Anspruch 1 oder 2, bei dem das Rotorblatt (12) eine Abscherkante mit im wesentlichen 90° aufweist.

4. Abschereinrichtung nach Anspruch 3, bei dem das Rotorblatt (12) einen rechteckigen Querschnitt aufweist.

5. Abschereinrichtung nach einem der vorangegangenen Ansprüche, bei dem jede Kante des Rotorblatts (12) als Abscherkante verwendbar ist.

6. Abschereinrichtung nach einem der vorangegangenen Ansprüche, bei dem der Winkel zwischen der ersten und der zweiten Ebene zwischen 0,1° und 22° liegt.

7. Abschereinrichtung nach einem der vorangegangenen Ansprüche, bei dem der Winkel zwischen der ersten und der zweiten Ebene zwischen 0,6° und 11° liegt.

8. Abschereinrichtung nach einem der vorangegangenen Ansprüche, der drei Rotorblätter (12) aufweist.

9. Abschereinrichtung nach einem der vorangegangenen Ansprüche, der zwei Statorblätter (14) aufweist.

## Revendications

1. Cisaille à lame rotative comportant :
un rotor (10) comportant une lame de rotor (12) montée sur celui-ci et apte à tourner autour d'un axe de rotation (11); et
une lame de stator (14);
la lame de rotor et la lame de stator définissant entre celles-ci un point de pincement (30) lorsque les lames passent l'une devant l'autre avec un espace intermédiaire de coupe pendant la rotation du rotor;
la lame de rotor comportant une face avant (42) et une face arrière (44), lesdites faces définissant le bord coupant de la lame de rotor (12), ladite face avant (42) ayant un axe de face avant (46) qui est une ligne le long de la face avant, l'axe (46) de la face avant croisant le bord de coupe au point de pincement (30) et se situant dans un plan perpendiculaire à l'axe de rotation (11) du rotor;
il est défini un premier plan imaginaire (48) contenant l'axe de rotation (11) du rotor (10) et étant parallèle audit axe de face avant (46);
il est défini en outre un deuxième plan imaginaire (50) contenant l'axe de rotation (11) du rotor (10) et le point du bord coupant du rotor adjacent au point de pincement (30);
où l'angle mesuré depuis ledit premier plan audit deuxième plan dans la direction de rotation du rotor est compris entre 0° et 90°, cet te condition étant remplie pour n'importe quel point du bord coupant de la lame de rotor (12) qui, avec la lame de stator (14), définit un point de pincement (30) défini entre les lames lorsqu'elles passent l'une devant l'autre,
caractérisée en ce que le bord coupant de la lame de rotor (12) est incliné relativement à l'axe de rotation (11) du rotor (10), tangentiellement au rotor, et le bord coupant de la lame de stator (14) est incliné relativement à l'axe de rotation (11) du rotor (10) dans la direction opposée à l'inclinaison de la lame de rotor (12) et sensiblement suivant le même angle.

2. Cisaille à lame rotative selon la revendication 1, où la lame de rotor (12) a un bord coupant d'au moins 80°.

3. Cisaille à lame rotative selon la revendication 1 ou la revendication 2, où la lame de rotor (12) a un bord coupant de sensiblement 90°.

4. Cisaille à lame rotative selon la revendication 3, où la lame de rotor (12) est rectangulaire en section transversale.

5. Cisaille à lame rotative selon l'une des revendications ci-dessus, où chaque bord de la lame de rotor (12) est apte à être utilisé comme bord coupant.

6. Cisaille à lame rotative selon l'une des revendications ci-dessus où ledit angle entre les premier et deuxième plans est compris entre 0,1° et 22°.

7. Cisaille à lame rotative selon l'une des revendications ci-dessus, où ledit angle entre les premier et deuxième plans est compris entre 0,6° et 11°.

8. Cisaille à lame rotative selon l'une des revendications ci-dessus, comportant trois lames de rotor (12).

9. Cisaille à lame rotative selon l'une des revendications ci-dessus comportant deux lames de stator (14).
